# EUROPEAN PATENT APPLICATION

(11) **EP 1 841 081 A1**
(43) Date of publication of application: **03.10.2007**
(21) Application number: 05814575.6
(22) Date of filing: 06.12.2005
(51) Int. Cl.: H04B 1/26, H04J 3/00, H04B 1/707, H04B 1/40

(54) **WIRELESS RECEIVING APPARATUS, MOBILE TERMINAL APPARATUS AND WIRELESS TRANSMITTING/RECEIVING APPARATUS INCLUDING THAT WIRELESS RECEIVING APPARATUS**

(30) Priority: 28.12.2004 JP 2004378777
(71) Applicant: MATSUSHITA ELECTRIC INDUSTRIAL CO., LTD., Osaka 571-8501 (JP)
(72) Inventor: NAKAMURA, Makoto, c/o Matsushita Electric Industrial Co., Ltd, Shiromi 1-chome, Cuo-ku, Osakai-shi, Osaka 540-6319 (JP); WATANABE, Kazunori, c/o Matsushita Electric Idustrial Co.,Ltd, Shiromi 1-chome, Chuo-ku, Osakai-shi, Osaka 540-6319 (JP); SHIBASAKI, Ichiro, c/o Matsushita Electric Industrial Co., Ltd., Shiromi 1-chome, Chuo-ku, Osakai-shi, Osaka 540-6319 (JP)
(74) Representative: Vossius & Partner
(86) International application number: PCT/JP2005/022383
(87) International publication number: WO 2006/070565

(57) **Abstract**

A wireless receiver, a wireless transceiver and a mobile terminal with the wireless receiver include a down-converter that can be used in common with respect to at least two different wireless communication systems using the same radio frequency band, and a local oscillation signal source capable of selecting an optimum C/N ratio for receiving at least two different wireless communication systems, wherein the local oscillation signal source is composed of a frequency divider, a switch, a first voltage controlled oscillator, a second voltage controlled oscillator, and a frequency synthesizer.

## Description

### Technical Field

The present invention relates to a wireless receiver that can be used for two different mobile communication systems, and a wireless transceiver and a mobile terminal including the same.

### Background Art

Recently, as a mobile telephone, the operation of a multi-system mobile terminal has been started, which can be used for switching between a TDMA (Time Division Multiple Access) system such as a GSM (Global System for Mobile Communications) and a CDMA (Code Division Multiple Access) such as a UMTS (Universal Mobile Telecommunications System).

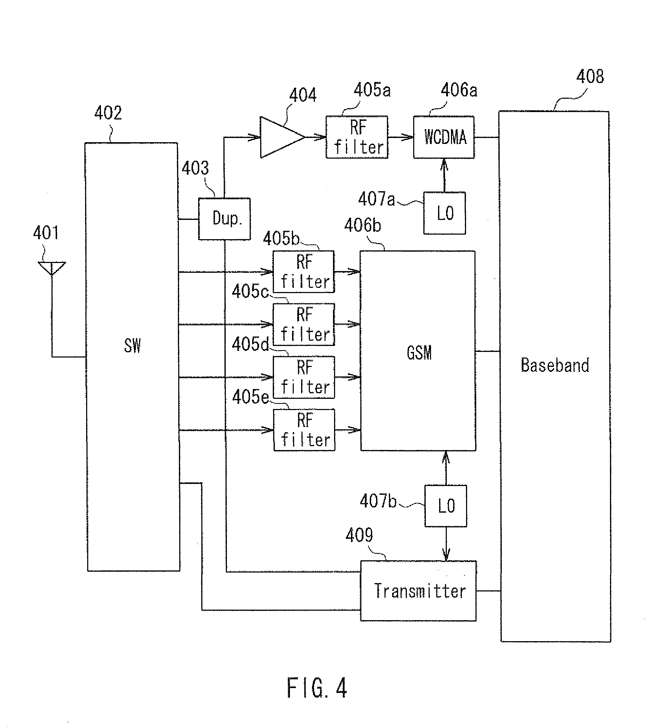

FIG. 4 is a block diagram showing a configuration of a mobile terminal that can be operated in plural systems of the conventional GSM and UMTS. The mobile terminal shown in FIG. 4 is capable of transmitting/receiving a radio signal in a 850 MHz band, a 900 MHz band, a 1.8 GHz band, and a 1.9 GHz band in the GSM, and transmitting/receiving a radio signal in a 1.9 GHz band or a 2 GHz band in the UMTS. Hereinafter, a description will be made assuming that a 1.9 GHz band is used as the UMT8.

In FIG. 4, reference numeral 401 denotes an antenna, 402 denotes an antenna switch (SW), 403 denotes a duplexer (Dup.), 404 denotes a high-frequency amplifier, 405a denotes a 1.9 GHz band-pass filter (RF filter), 405b denotes a 850 MHz band-pass filter (RF filter), 405c denotes a 900 MHz band-pass niter (RF filter), 405d denotes a 1.8 GHz band-pass filter (RF filter), 405e denotes a 1.9 GHz band-pass filter (RF filter), 406a denotes a first down-converter (WCDMA) converting a radio frequency in a 1.9 GHz band into a baseband, 406b denotes a second down-converter (GSM) converting a radio frequency in each of a 850 MHz band, a 900 MHz band, a 1.8 GHz band, and a 1.9 GHz band into a baseband, 407a denotes a first local oscillation signal source (LO), 407b denotes a second local oscillation signal source (LO), 408 denotes a baseband signal processing apparatus (Baseband), and 409 denotes a transmitter.

First, the case where a UMTS radio signal is transmitted/received will be described. A UMTS radio signal in a 1.9 GHz band received by the antenna 401 passes through the antenna switch 402, the duplexer 403, and the high-frequency amplifier 404, and has its band limited by the 1.9 GHz band-pass filter 405a. The signal having passed through the 1.9 GHz band-pass filter 405a is mixed with an output signal of the first local oscillation signal source 407a in the first down-converter 406a, frequency-converted into a baseband signal, and subjected to appropriate processing in the baseband signal processing apparatus 408.

Furthermore, the UMTS radio signal generated by the baseband signal processing apparatus 408 and the transmitter 409 is transmitted from the antenna 401 via the duplexer 403 and the antenna switch 402.

Next, the case where a GSM radio signal is transmitted/received will be described. A GSM radio signal in a 1.9 GHz band received by the antenna 410 passes through the antenna switch 402, and has its band limited by the 1.9 GHz band-pass filter 405e. The signal having passed through the 1.9 GHz band-pass filter 405e is mixed with an output signal from the second local oscillation signal source 407b in the second converter 406b, frequency-converted into a baseband signal, and subjected to appropriate processing in the baseband signal processing apparatus 408.

Furthermore, GSM radio signals in the other bands received by the antenna 401 pass through the antenna switch 402, have their bands limited by the 850 MHz band-pass filter 405b, the 900 MHz band-pass filter 405c, or the 1.8 GHz band-pass filter 405d, and thereafter are input to the second converter 406b. The input signal is mixed with an output signal of the second local oscillation signal source 407b in the second converter 406b, frequency-converted into a baseband signal, and subjected to appropriate processing in the baseband signal processing apparatus 408.

Furthermore, the GSM radio signal generated by the baseband signal processing apparatus 408 and the transmitter 409 is transmitted from the antenna 401 via the antenna switch 402.

Thus, in the mobile terminal shown in FIG. 4, the UMTS radio signal and the GMS radio signal are frequency-converted into a baseband frequency band via separate systems irrespective of the same frequency band, whereby the operation can be performed in plural systems.
Patent Document 1: U.S. Patent Publication No. 2004/0189526
Non-Patent Document 1: Behzad Razavi, "RF Microelectronics", Prentice Hass, p. 155
Non-Patent Document 2: Keizo Tachikawa, "W-CDMA mobile communication system", Maruzen Co., Ltd., p. 219

### Disclosure of Invention

### Problem to be Solved by the Invention

In order to enable the operation in plural systems in the conventional configuration as shown in FIG. 4, even in the case of using the same radio frequency band, it is necessary to prepare wireless receiving circuits in separate systems.

In particular, the UMTS and the GSM are capable of using the same frequency band in the 805 MHz band and the 1.8 GHz band, as well as the 1.9 GHz band. If an attempt is made so as to prepare wireless receiving circuits of separate systems for the GSM and the UMTS with respect to these frequency bands, the circuit scale and component count increase.

The present invention solves the above-mentioned problem, and its object is to provide a wireless receiver that can be operated in at least two different wireless communication systems using the same radio frequency band while avoiding the increase in a circuit scale and a component count, a wireless transceiver including the wireless receiver, and a mobile terminal. Means for Solving Problem

A wireless receiver according to the present invention includes a down-converter capable of being used in common with respect to at least two different wireless communication systems using the same radio frequency band so as to convert a radio frequency into a baseband frequency; and a local oscillation signal source capable of selecting an optimum C/N ratio (ratio between carrier power and noise power) when receiving the at least two different wireless communication systems, wherein the down-converter performs frequency conversion based on an output of the local oscillation signal source.

A wireless receiver according to the present invention with another configuration includes a down-converter capable of being used in common with respect to at least two different wireless communication systems using the same radio frequency band so as to convert a radio frequency into a baseband frequency; at least two local oscillation signal sources having an optimum C/N ratio for respective wireless communication systems for receiving a signal in the at least two different wireless communication systems; and a switch selecting between the at least two local oscillation signal sources, wherein the down-converter performs frequency conversion based on an output of any of the at least two local oscillation signal sources selected with the switch.

Preferred embodiments of the above-mentioned wireless receiver, and the configurations of the wireless transceiver including the wireless receiver and the mobile terminal will be described later.

### Effects of the Invention

According to the present invention, a down-converter for receiving, which is required respectively for at least two different systems conventionally, can be shared, whereby the number of circuit systems for receiving a radio frequency band can be reduced. Consequently, a wireless receiver capable of avoiding the increase in the circuit scale and component count, a wireless transceiver with the wireless receiver mounted thereon, and a mobile terminal are realized.

### Brief Description of Drawings

[FIG. 1] FIG. 1 is a block diagram showing an exemplary configuration in an embodiment of a wireless receiver according to the present invention.
[FIG. 2] FIG. 2 is a block diagram showing an exemplary configuration in an embodiment of a wireless transceiver according to the present invention.
[FIG. 3] FIG. 3 is a block diagram showing an exemplary configuration in an embodiment of a mobile terminal according to the present invention.
[FIG. 4] FIG. 4 is a block diagram showing a configuration of a mobile terminal that can be operated in plural systems of conventional GSM and UMTS.

### Description of the Invention

In a preferable embodiment of a wireless receiver of the present invention, the above-mentioned at least two different wireless communication systems include a TDMA system and a CDMA system.

Furthermore, the wireless transceiver including such a wireless receiver includes a wireless transmitter adapted for each wireless communication system, and a local oscillation signal source used for receiving a signal in a TDMA system and a local oscillation signal source used for transmitting a signal in a TDMA system share a part of or all of the components thereof. Alternatively, the local oscillation signal source used for receiving a signal in a TDMA system and a local oscillation signal source used for transmitting signals in a CDMA system and a TDMA system share a part of or all of the components thereof.

Preferably, the wireless transceiver further includes a duplexer branching an input to the wireless receiver and an output from the wireless transmitter in accordance with each frequency.

Furthermore, the wireless transceiver of another preferable embodiment further includes a filter capable of transmitting only a received signal frequency band, one terminal of which is connected to an input of the wireless receiver; a high-frequency amplifier whose output terminal is connected to the other terminal of the filter; and a duplexer branching an input signal of the high-frequency amplifier and an output signal of the wireless transmitter in accordance with each frequency.

Furthermore, the wireless transceiver of another embodiment further includes a duplexer branching an input to the wireless receiver and an output in the CDMA system from the wireless transmitter in accordance with each frequency.

Furthermore, the wireless transceiver of another preferable embodiment further includes a filter capable of transmitting only a received signal frequency band, one terminal of which is connected to an input of the wireless receiver; a high-frequency amplifier whose output terminal is connected to the other terminal of the filter; and a duplexer branching an input to the high-frequency amplifier and an output in the CDMA system from the wireless transmitter in accordance with each frequency.

A mobile terminal of the present invention includes the above-mentioned wireless transceiver; an antenna connected to the wireless transceiver and transmitting/receiving a radio frequency; and a baseband signal processing apparatus connected to the wireless transceiver.

A mobile terminal of the present invention with another configuration includes the above-mentioned wireless transceiver; a switch connecting and switching an output in a TDMA system among the wireless transceiver and the wireless transmitter; an antenna connected to the switch, and transmitting/receiving a radio frequency; and a baseband signal processing apparatus connected to the radio transceiver.

A mobile terminal of the present invention with still another configuration includes the above-mentioned at least two wireless transceivers used with respect to at least two radio frequencies; a switch connecting and switching an output in a TDMA system among each duplexer of the at least two wireless transceivers and the at least two wireless transmitters; an antenna connected to the switch, and transmitting/receiving at least two radio frequencies; and a baseband signal processing apparatus connected to the at least two wireless transceivers.

Hereinafter, the present invention will be described by way of embodiments with reference to the drawings.

### (Embodiment 1)

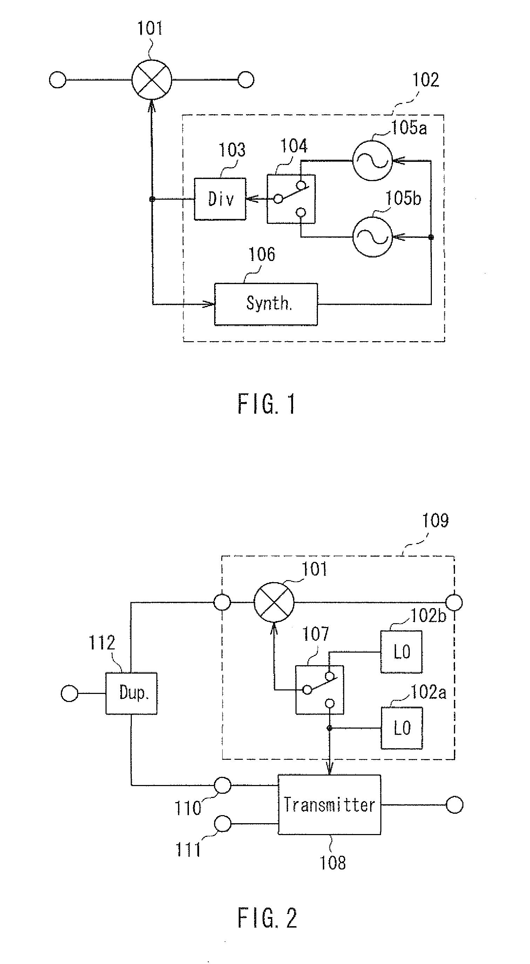

FIG. 1 is a block diagram showing an exemplary configuration of a wireless receiver according to Embodiment 1 of the present invention. In FIG. 1, reference numeral 141 denotes a down-converter, 102 denotes a local oscillation signal source, 103 denotes a frequency divider (Div), 104 denotes a switch, 105a denotes a first voltage controlled oscillator, 105b denotes a second voltage controlled oscillator, and 106 denotes a frequency synthesizer (Synth.). The local oscillation signal source 102 is composed of the frequency divider 103, the switch 104, the first voltage controlled oscillator 105a, the second voltage controlled oscillator 105b, and the frequency synthesizer 106.

Regarding the operation of the wireless receiver with such a configuration, the case will be described in which a GSM and a UMTS, which are two different wireless communication systems using the same radio frequency band, are shared in a 1.9 GHz band. According to Non-patent documents 1 and 2, the necessary NFs (noise factors) of a receiving system at reference sensitivity points of the GSM and the UMTS can be both set to be 9 dB, so that the GSM and the UMTS can share the down-converter 101 in the same 1.9 GHz band.

One of the performance requirements for the local oscillation signal source 102 is a suitable C/N (ratio between carrier power and noise power). When a received wanted signal and interference signal are mixed with a local oscillation signal with a certain C/N ratio so as to be frequency-converted, a noise spectrum proportional to the C/N ratio of the local oscillation signal is added to each signal. At this time, when a noise spectrum added to the interference signal is overlapped with a frequency band of the wanted signal, the noise level of the wanted signal may be degraded. This phenomenon is referred to as reciprocal mixing.

In order to prevent the reciprocal mixing, it is necessary to suppress the C/N ratio of the local oscillation signal source 102. For example, it is calculated to which degree of C/N ratio is required in the GSM. The input reference sensitivity level in the GSM is defined to be -102 dBm. Assuming that an NF of a receiving system is 9 dB, an input conversion value of noise allowable in the receiving system is -165 dBm/Hz, which is larger than a thermal noise value by 9 dB.

On the other hand, under the input condition of 3 MHz interfering signal, which is one of the interfering signal input conditions, a 3 MHz offset signal at an input level of -23 dBm should be input, together with a wanted signal at an input level of -99 dBm. Since the input level is larger by 3dB than the input reference sensitivity level, the input conversion value of noise allowable in the receiving system is calculated to be -162 dBm/Hz. In other words, the increment of allowable noise is -165 dBm/Hz.

Assuming that this increment is an allowable value of noise generated in a wanted signal band by reciprocal mixing, the C/N ratio allowable in the local oscillation signal source 102 is -142 dBc/Hz, which is a ratio with respect to the interference signal input level.

Next, the degree to which C/N ratio is required in the UMTS will be considered. The input reference sensitivity level in the UMTS is -115 dBm in the 1.9 GHz band. On the other hand, as the input condition of an adjacent channel selectivity, which is one of the interfering signal input conditions, a 5 MHz offset signal at an input level of -52 dBm should be input, together with a wanted signal at -101 dBm that is larger than the input reference sensitivity level by 14 dB.

The UMTS is a CDMA system, and according to the UMTS, the same frequency as that of a wanted signal is multiplexed with signals of other users, so that the C/N ratio allowable in the local oscillation signal source cannot be obtained by the same calculation as that of the GSM. Assuming that the allowable value of noise generated by reciprocal mixing is -165 dBm/Hz that is equal to that of the GSM, the C/N ratio allowable in the local oscillation signal source 102 is -113 dBc/Hz.

As described above, the C/N ratio allowable in the local oscillation signal source 102 is -142 dBc/Hz in the GSM and -113 dBc/Hz in the UMTS. Thus, the allowable C/N ratio varies significantly between the two systems.
In order to realize the local oscillation signal source 102 having an optimum C/N ratio for each wireless communication system, the first voltage controlled oscillator 105a and the second voltage controlled oscillator 105b having different C/N ratios are provided, and the outputs of the first voltage controlled oscillator 105a and the second voltage controlled oscillator 105b are switched with the switch 104 in accordance with the respective systems.

The output of the first or second voltage controlled oscillator 105a, 105b selected with the switch 104 passes through the frequency divider 103, is supplied to the down-converter 101 as the output of the local oscillation signal source 102 having an optimum C/N ratio for each system, and is mixed with a received radio signal to be frequency-converted into a baseband signal.

Furthermore, the output of the first or second voltage controlled oscillator 105a, 105b selected with the switch 104 also is supplied to the frequency synthesizer 106 so that the first voltage controlled oscillator 105a or the second voltage controlled oscillator 105b holds a predetermined radio frequency.

With such a configuration, the down-converter for receiving, which is required respectively for at least two different systems conventionally, can be shared, whereby the number of circuit systems receiving a radio frequency band can be reduced. Consequently, the increase in the circuit scale and component count can be avoided.

In the present embodiment, although a method for switching a voltage controlled oscillator is employed as a method for obtaining an optimum C/N ratio, another method may be used as long as it has a configuration capable of realizing the same function. Furthermore, although a radio signal in a 1.9 GHz band is applied, this embodiment also applies to the case of another radio frequency band.

### (Embodiment 2)

FIG. 2 is a block diagram showing an exemplary configuration of a wireless transceiver according to Embodiment 2 of the present invention. In FIG. 2, reference numeral 101 denotes a down-converter, 102a denotes a first local oscillation signal source, 102b denotes a second local oscillation signal source, 107 denotes a switch, 108 denotes a wireless transmitter, 109 denotes a wireless receiver composed of the down-converter 101, the first local oscillation signal source 102a, the second local oscillation signal source 102b, and the switch 107, 110 denotes a CDMA transmitting output, 111 denotes a TDMA transmitting output, and 112 denotes a duplexer (Dup.).

For example, the first local oscillation signal source 102a has an optimum C/N ratio for the GSM, and the second local oscillation signal source 102b has an optimum C/N ratio for the UMTS. In accordance with the system of a radio signal to be received, the output of the first local oscillation signal source 102a or the second local oscillation signal source 102b is selected with the switch 107, and is supplied to the down-converter 101. Thus, the down-converter 101 can perform frequency conversion to a baseband signal irrespective of the system of the received radio signal.

According to the CDMA (Code Division Multiple Access) system such as the UMTS, it is necessary for the wireless transmitter and the wireless receiver to be operated simultaneously, so that the wireless transmitter and the wireless receiver need to have individual local oscillation signal sources.

However, in the wireless receiver 109 with the configuration shown in FIG. 2, while the local oscillation signal source 102b is being operated so as to receive a signal in the UMTS, the first local oscillation signal source 102a is not required. Thus, during this time, the first local oscillation signal source 102a can be used for the wireless transmitter 108.

Furthermore, in order to separate a transmitting output from a receiving input, the duplexer 112 is interposed between the CDMA transmitting output 110 and the input of the down-converter 101. According to the TDMA (Time Division Multiple Access) system such as the GSM, it is not necessary to operate the wireless receiver 109 at a time of transmitting. Thus, the first local oscillation signal source 102a can be used for frequency conversion in the wireless transmitter 108. Furthermore, since the transmitting output and the receiving input are not present simultaneously, the output terminal of the TDMA transmitting output 111 can be provided directly without connecting the TDMA transmitting output 111 to the duplexer 112.

With such a configuration, the down-converter for receiving, which is required respectively for at least two different systems conventionally, can be shared, whereby the number of circuit systems receiving a signal in a radio frequency band can be reduced. Consequently, the increase in the circuit scale and component count can be avoided.

Furthermore, the wireless transmitter and the wireless receiver share the local oscillation signal source, whereby the number of components of the wireless transceiver can be reduced. Although the output terminal of the TDMA transmitting output 111 can be provided directly as described above, the TDMA transmitting output 111 maybe connected to the duplexer 112, whereby the TDMA transmitting output 11 and the CDMA transmitting output 110 can be output commonly.

Furthermore, a high-frequency amplifier or a band-pass filter may be interposed between the duplexer 112 and the down-converter 101 instead of directly connecting the duplexer 112 to the down-converter 101, whereby the receiving performance can be enhanced.

### (Embodiment 3)

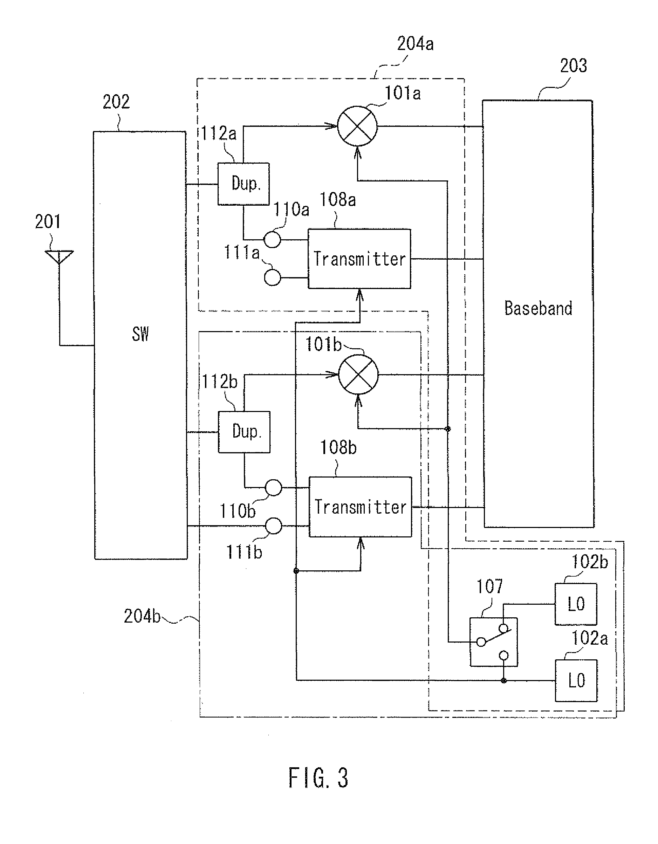

FIG. 3 is a block diagram showing an exemplary configuration of a mobile terminal according to Embodiment 3 of the present invention. In FIG. 3, reference numeral 101a denotes a first down-converter, 101b denotes a second down-converter, 102a denotes a first local oscillation signal source, 102b denotes a second local oscillation signal source, 107 denotes a switch, 108a denotes a first wireless transmitter, 108b denotes a second wireless transmitter, 110a denotes a first CDMA transmitting output, 110b denotes a second CDMA transmitting output, 111a denotes a first TDMA transmitting output, 111b denotes a second TDMA transmitting output, 112a denotes a first duplexer (Dup.), 112b denotes a second duplexer (Dup.), 201 denotes an antenna, 202 denotes an antenna switch, 203 denotes a baseband signal processing apparatus (Baseband), 204a denotes a first wireless transceiver, and 204b denotes a second wireless transceiver. The first wireless transceiver 204a and the second wireless transceiver 204b share the switch 107, the first local oscillation signal source 102a, and the second local oscillation signal source 102b.

In the same way as in the wireless transceiver of the embodiment shown in FIG. 2, the first wireless transceiver 204a and the second wireless transceiver 204b in the mobile terminal of the present embodiment can perform frequency conversion to a baseband signal irrespective of the system of a received radio signal. More specifically, the first down-converter 101a or the second-down converter 101b performs frequency conversion to a baseband signal, using the output of the first local oscillation signal source 102a or the second local oscillation signal source 102b having an optimum C/N ratio for the TDMA system or the CDMA system selected with the switch 107. Furthermore, the first wireless transmitter 108a and the second wireless transmitter 108b, and the wireless receiver share the first local oscillation signal source 102a.

When the radio frequency band in which the first wireless transceiver 204a transmits/receives a signal is defined as a first radio frequency band, and the radio frequency band in which the second wireless transceiver 204b transmits/receives a signal is defined as a second radio frequency band, the first local oscillation signal source 102a and the second local oscillation signal source 102b output a local oscillation signal adapted for the first or second radio frequency band. For example, the local oscillation signal adapted for the first or second radio frequency band can be output by switching frequency dividing numbers of the frequency divider 103 of the wireless receiver shown in FIG. 1 in accordance with the first or second radio frequency band.

The radio signal of the TDMA or CDMA system received by the antenna 201 is input to the first wireless transceiver 204a or the second wireless transceiver 204b selected with the antenna switch 202 in accordance with the radio frequency band, and converted into a baseband signal with an optimum C/N value for the TDMA or the CDMA. After that, the baseband signal is subjected to appropriate processing by the baseband signal processing apparatus 203.

Furthermore, the CDMA transmitting output generated by the baseband signal processing apparatus 203 and the first wireless transceiver 204a becomes the first CDMA transmitting output 110a, and is transmitted from the antenna 201 as a radio signal having a first radio frequency band via the duplexer 112a and the antenna switch 202. Similarly, the TDMA transmitting output generated by the baseband signal processing apparatus 203 and the first wireless transceiver 204a becomes the first TDMA transmitting output 111a, and is transmitted from the antenna 201 as a radio signal having a first radio frequency band via the antenna switch 202.

Furthermore, the CDMA transmitting output generated by the baseband signal processing apparatus 203 and the second wireless transceiver 204b becomes the second CDMA transmitting output 110b, and is transmitted from the antenna 201 as a radio signal having a second radio frequency band via the second duplexer 112b and the antenna switch 202. Similarly, the TDMA transmitting output generated by the baseband signal processing apparatus 203 and the second wireless transceiver 204b becomes the second TDMA transmitting output 111b, and is transmitted from the antenna 201 as a radio signal having a second radio frequency band via the antenna switch 202.

By adopting such a configuration, the wireless receiver using the same radio frequency band, which is required respectively for each system of the TDMA and the CDMA conventionally, can be shared, whereby the number of receiving circuit systems can be reduced. Consequently, the increase in the circuit scale and the increase in the component count can be avoided.

In FIG. 3, although the first TDMA transmitting output 111a and the second TDMA transmitting output 111b are connected directly to the antenna switch 202, the TDMA transmitting output 111a or 111b and the first CDMA transmitting output 110a or the second CDMA transmitting output 110b may be output commonly.

Furthermore, a high-frequency amplifier or a band-pass filter can be interposed between the first duplexer 112a and the first down-converter 101a or between the second duplexer 112b and the second down-converter 101b without directly connecting the first duplexer 112a to the first down-converter 101a or directly connecting the second duplexer 112b to the second down-converter 101b, whereby the receiving performance can be enhanced. Industrial Applicability

The present invention is applicable to a wireless receiver that can be used in two different mobile communication systems, and a wireless transceiver and a mobile terminal with the wireless receiver mounted thereon, and enables the operation of at least two different wireless communication systems using the same radio frequency band while avoiding the increase in a circuit scale and a component count.

## Claims

1. A wireless receiver, comprising:
a down-converter capable of being used in common with respect to at least two different wireless communication systems using the same radio frequency band so as to convert a radio frequency into a baseband frequency; and
a local oscillation signal source capable of selecting an optimum C/N ratio when receiving the at least two different wireless communication systems,
wherein the down-converter performs frequency conversion based on an output of the local oscillation signal source.

2. The wireless receiver according to claim 1, comprising:
at least two local oscillation signal sources having an optimum C/N ratio for respective wireless communication systems for receiving a signal in the at least two different wireless communication systems; and
a switch selecting between the at least two local oscillation signal sources,
wherein the down-converter performs frequency conversion based on an output of any of the at least two local oscillation signal sources selected with the switch.

3. The wireless receiver according to claim 1, wherein the at least two different wireless communication systems include a TDMA system and a CDMA system.

4. A wireless transceiver comprising:
the wireless receiver according to claim 3; and
a wireless transmitter adapted for each of the wireless communication systems,
wherein the local oscillation signal source used for receiving a signal in the TDMA system and the local oscillation signal source used for transmitting the TDMA system share a part of or all of components thereof.

5. A wireless transceiver, comprising:
the wireless receiver according to claim 3; and
a wireless transmitter adapted for each of the wireless communication systems,
wherein the local oscillation signal source used for receiving the TDMA system and the local oscillation signal source used for transmitting the CDMA system and the TDMA system share a part of or all of components thereof.

6. The wireless transceiver according to claim 4 or 5, further comprising a duplexer branching an input to the wireless receiver and an output from the wireless transmitter in accordance with each frequency.

7. The wireless transceiver according to claim 4 or 5, further comprising:
a filter capable of transmitting only a receiving signal frequency band, one terminal of which is connected to an input of the wireless receiver;
a high-frequency amplifier whose output terminal is connected to the other terminal of the filter; and
a duplexer branching an input signal to the high-frequency amplifier and an output signal from the wireless transmitter in accordance with each frequency.

8. The wireless transceiver according to claim 4 or 5, further comprising a duplexer branching an input to the wireless receiver and an output in the CDMA system from the wireless transmitter in accordance with each frequency.

9. The wireless transceiver according to claim 4 or 5, further comprising:
a filter capable of transmitting only a receiving signal frequency band, one terminal of which is connected to an input of the wireless receiver;
a high-frequency amplifier whose output terminal is connected to the other terminal of the filter; and
a duplexer branching an input to the high-frequency amplifier and an output in the CDMA system from the wireless transmitter in accordance with each frequency.

10. A mobile terminal, comprising:
the wireless transceiver according to claim 6 or 7;
an antenna connected to the wireless transceiver and transmitting/receiving a radio frequency; and
a baseband signal processing apparatus connected to the wireless transceiver.

11. A mobile terminal, comprising:
at least two of the wireless transceivers according to claim 6 or 7 used for at least two radio frequencies;
a switch connected to each duplexer of the at least two wireless transceivers, and switching between at least two radio frequencies;
an antenna connected to the switch, and transmitting/receiving at least two radio frequencies; and
a baseband signal processing apparatus connected to the at least two wireless transceivers.

12. A mobile terminal, comprising:
the wireless transceiver according to claim 8 or 9;
a switch connecting and switching an output in a TDMA system among the wireless transceiver and the wireless transmitter;
an antenna connected to the switch, and transmitting/receiving a radio frequency; and
a baseband signal processing apparatus connected to the radio transceiver.

13. A mobile terminal, comprising:
at least two of the wireless transceivers according to claim 8 or 9, used with respect to at least two radio frequencies;
a switch connecting and switching an output in a TDMA system among each duplexer of the at least two wireless transceivers and the at least two wireless transmitters;
an antenna connected to the switch, and transmitting/receiving at least two radio frequencies; and
a baseband signal processing apparatus connected to the at least tow wireless transceivers.

## Amended claims

### Amended claims under Art. 19.1 PCT

**1.** A wireless receiver, comprising:
a down-converter capable of being used in common with respect to at least two different wireless communication systems using the same radio frequency band so as to convert a radio frequency into a baseband frequency; and
a local oscillation signal source capable of selecting an optimum C/N ratio when receiving the at least two different wireless communication systems,
wherein the down-converter performs frequency conversion based on an output of the local oscillation signal source.

**2.** (Amended) The wireless receiving apparatus according to claim 1, [comprising] wherein the local oscillation signal source comprises:
at least two local oscillation signal [sources] circuits having an optimum C/N ratio for respective wireless communication systems for receiving a signal in the at least two different wireless communication systems; and
a switch selecting between the at least two local oscillation signal sources.

**3.** The wireless receiver according to claim 1, wherein the at least two different wireless communication systems include a TDMA system and a CDMA system.

**4.** A wireless transceiver comprising:
the wireless receiver according to claim 3; and
a wireless transmitter adapted for each of the wireless communication systems,
wherein the local oscillation signal source used for receiving a signal in the TDMA system and the local oscillation signal source used for transmitting the TDMA system share a part of or all of components thereof.

**5.** A wireless transceiver, comprising:
the wireless receiver according to claim 3; and
a wireless transmitter adapted for each of the wireless communication systems,
wherein the local oscillation signal source used for receiving the TDMA system and the local oscillation signal source used for transmitting the CDMA system and the TDMA system share a part of or all of components thereof.

**6.** The wireless transceiver according to claim 4 or 5, further comprising a duplexer branching an input to the wireless receiver and an output from the wireless transmitter in accordance with each frequency.

**7.** The wireless transceiver according to claim 4 or 5, further comprising:
a filter capable of transmitting only a receiving signal frequency band, one terminal of which is connected to an input of the wireless receiver;
a high-frequency amplifier whose output terminal is connected to the other terminal of the filter; and
a duplexer branching an input signal to the high-frequency amplifier and an output signal from the wireless transmitter in accordance with each frequency.

**8.** The wireless transceiver according to claim 4 or 5, further comprising a duplexer branching an input to the wireless receiver and an output in the CDMA system from the wireless transmitter in accordance with each frequency.
